# DEMANDE DE BREVET EUROPEEN

(11) **EP 0 730 988 A1**
(43) Date de publication de la demande: **11.09.1996**
(21) Numéro de dépôt: 96400435.2
(22) Date de dépôt: 29.02.1996
(51) Int. Cl.: B60G 21/10

(54) **Dispositif de suspension hydropneumatique pour véhicule automobile**

(30) Priorité: 09.03.1995 FR 9502773
(71) Demandeur: AUTOMOBILES PEUGEOT, 75116 Paris (FR); AUTOMOBILES CITROEN, 92200 Neuilly sur Seine (FR)
(72) Inventeur: Ney, Yves, 57700 Hayange (FR); Hernette, Vincent, 75014 Paris (FR)
(74) Mandataire: Berger, Helmut

(57) **Abrégé**

La présente invention concerne un dispositif de suspension hydropneumatique pour véhicule automobile.

Le dispositif est caractérisé en ce qu'il comprend un distributeur hydraulique (14) pouvant occuper une position de croisement des chambres (8, 13) de deux vérins hydrauliques (1, 2) et une position de décroisement dans laquelle les chambres (8, 13) d'un vérin hydraulique (1) sont isolées des chambres (8, 13) de l'autre vérin hydraulique (2) de façon à obtenir une suspension plus souple et moins amortie en position de ligne droite du véhicule, et plus raide et plus amortie en position de croisement des vérins.

L'invention trouve application dans le domaine de l'automobile.

## Description

La présente invention concerne un dispositif de suspension hydropneumatique pour véhicule automobile.

On connaît une suspension hydropneumatique comprenant deux vérins d'un même essieu d'un véhicule automobile dont les chambres respectives sont croisées pour assurer l'anti-dévers de la caisse du véhicule sous l'effet d'une force centrifuge quand le véhicule se déplace par exemple dans un virage.

Cependant, cette suspension connue demeure inconfortable pour des sollicitations en roulis dues aux petites inégalités de la route lorsque le véhicule se déplace en ligne droite.

La présente invention a pour but d'éliminer l'inconvénient ci-dessus en proposant un dispositif de suspension hydropneumatique pour véhicule automobile comprenant, pour chaque roue du véhicule, un vérin hydraulique dont les chambres sont croisées respectivement avec les chambres d'un autre vérin hydraulique, la chambre sous pression de chaque vérin étant raccordée à un accumulateur hydropneumatique par l'intermédiaire d'un amortisseur, et qui est caractérisé en ce qu'il comprend un distributeur hydraulique pouvant occuper une position de croisement des chambres des deux vérins hydrauliques et une position de décroisement dans laquelle les chambres d'un vérin hydraulique sont isolées des chambres de l'autre vérin hydraulique de façon à obtenir une suspension plus souple et moins amortie en position de ligne droite du véhicule.

En position de décroisement, le distributeur hydraulique relie en série les deux conduites raccordant les deux chambres de chaque vérin hydraulique au distributeur.

Selon une variante de réalisation, en position de décroisement, le distributeur - hydraulique relie également les deux conduites raccordées ensemble d'un vérin à un accumulateur hydropneumatique additionnel par l'intermédiaire d'un amortisseur additionnel de façon que l'ensemble accumulateur-amortisseur additionnels soit relié en parallèle à l'ensemble accumulateur hydropneumatique-amortisseur précité.

En position de croisement, le distributeur hydraulique relie chaque conduite de croisement de deux chambres des vérins hydrauliques à un amortisseur relié en série à l'amortisseur associé à l'accumulateur hydropneumatique additionnel précité.

Selon une autre variante de réalisation, en position de croisement, le distributeur hydraulique relie un amortisseur en série avec chaque conduite de croisement de deux chambres des deux vérins hydrauliques.

Le distributeur hydraulique, en position de décroisement, peut être agencé pour raccorder ensemble en série les deux paires de conduites respectivement des deux vérins hydrauliques à un correcteur hydraulique de hauteur de la caisse du véhicule par l'intermédiaire d'un clapet à bille de liaison des deux paires de conduites, le clapet servant à empêcher le passage de fluide d'un vérin à l'autre tant que le correcteur n'intervient pas.

Dans le cas où deux vérins de l'essieu avant et deux vérins de l'essieu arrière du véhicule assurent une fonction anti-dévers, avec les chambres anti-dévers d'une paire de vérins d'un même essieu qui sont croisées, le distributeur hydraulique, en position de croisement des chambres anti-dévers de chaque paire de vérins, met en communication de fluide les deux paires de chambres croisées anti-dévers des deux vérins de l'essieu arrière respectivement avec deux paires de chambres croisées anti-dévers des deux vérins de l'essieu avant, chacune des chambres anti-dévers d'un vérin de l'essieu arrière communiquant avec la chambre anti-dévers sollicitée de manière identique du vérin de l'essieu avant situé du même côté, et le distributeur hydraulique, en position de décroisement, isole les chambres anti-dévers des vérins de l'essieu avant en reliant ensemble les conduites de liaison des deux chambres anti-dévers d'un même vérin et court-circuite les conduites de croisement des chambres anti-dévers des vérins de l'essieu arrière.

Avantageusement, les deux vérins de l'essieu arrière comprennent chacun deux chambres anti-dévers et une chambre supérieure anti-pompage raccordée à l'accumulateur hydropneumatique précité.

Dans le cas où chaque paire de vérins situés d'un même côté respectivement de l'essieu avant et de l'essieu arrière assure une fonction anti-tangage avec les chambres anti-tangage des deux vérins d'un même côté qui sont croisées, le distributeur hydraulique, en position de croisement, met en communication de fluide les deux chambres anti-tangage respectivement des deux vérins d'un même côté et, en position de décroisement, isole les deux chambres d'un vérin des deux chambres du vérin situé du même côté.

Les deux vérins de l'essieu arrière comprennent chacun deux chambres anti-tangage et une chambre anti-pompage raccordée à l'accumulateur hydropneumatique précité.

Le distributeur hydraulique précité est du type à commande électromagnétique avec rappel par ressort.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels.

La figure 1 représente le schéma de principe du dispositif de suspension hydropneumatique conforme à l'invention.

La figure 2 représente une configuration particulière d'un distributeur hydraulique du dispositif de l'invention.

La figure 3 représente une autre configuration de ce distributeur hydraulique.

La figure 4 représente l'utilisation du dispositif de l'invention avec un correcteur de hauteur, par essieu, de la caisse du véhicule.

La figure 5 représente l'utilisation du dispositif de l'invention dans une suspension agencée pour assurer une fonction anti-dévers du véhicule.

La figure 6 représente l'utilisation du dispositif de l'invention dans une suspension agencée pour assurer une fonction anti-tangage du véhicule.

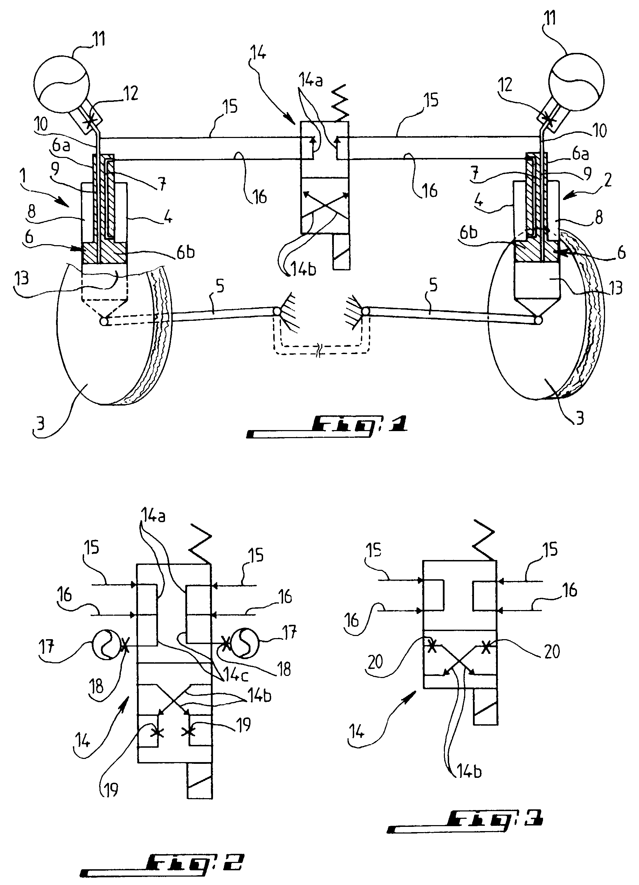

Le principe général de fonctionnement du dispositif de suspension hydropneumatique pour véhicule automobile conforme à l'invention va être décrit en référence à la figure 1.

Sur cette figure, les références 1 et 2 désignent respectivement deux vérins hydrauliques de suspension associés respectivement à deux roues 3 du véhicule.

Comme symbolisé en pointillés, les deux vérins hydrauliques 1, 2 sont associés à un même essieu, avant ou arrière du véhicule. De plus, comme cela est connu en soi, les deux vérins 1, 2 ont leurs chambres respectives qui sont croisées de façon à assurer une fonction anti-dévers de la caisse du véhicule. Cependant, comme cela ressortira de la description qui va suivre, l'invention s'applique également au cas où deux vérins hydrauliques sont associés respectivement aux deux essieux avant et arrière du véhicule en étant situés d'un même côté avec leurs chambres respectives assurant une fonction anti-tangage.

Chaque vérin 1, 2 comprend un cylindre 4 qui est relié à son extrémité inférieure à un bras 5 de support de roue et dans lequel est monté coulissant un piston 6 qui est relié à la caisse du véhicule.

La tige 6a du piston 6 traverse de façon étanche la paroi transversale supérieure du cylindre 4 et comprend un conduit longitudinal 7 débouchant d'une part dans la chambre anti-dévers supérieure 8 délimitée dans le cylindre 4 par la tête 6b du piston 6 et d'autre part au voisinage de l'extrémité supérieure extérieure de la tige 6a.

Un autre conduit longitudinal 9 traverse la tige 6a et la tête 6b du piston 6 en débouchant d'une part dans la chambre anti-dévers inférieure 13 du cylindre 4 et d'autre part à l'extrémité supérieure de la tige 6a. L'extrémité supérieure débouchante du conduit 9 est raccordée à une conduite 10 qui est raccordée à un accumulateur hydropneumatique à membrane 11 par l'intermédiaire d'un amortisseur 12.

Le dispositif conforme à l'invention comprend un distributeur hydraulique 14, dans le cas présent du type à commande électromagnétique avec rappel par ressort, et qui peut occuper soit une position de croisement des chambres anti-dévers 8, 13 des vérins 1, 2, soit une position de décroisement ou découplée de ces chambres.

Plus précisément, le distributeur hydraulique 14 comporte quatre orifices, deux raccordés respectivement à deux conduites 15, 16 de communication avec les chambres anti-dévers 8, 13 d'un vérin 1, les deux autres raccordés respectivement à deux conduites 15, 16 de communication avec les deux chambres anti-dévers 8, 13 de l'autre vérin 2. Chaque conduite 15 est raccordée à la conduite 10 du vérin correspondant 1, 2 tandis que chaque conduite 16 est raccordée à l'extrémité débouchant à l'extérieur du conduit longitudinal 7 du vérin correspondant.

Selon la position du dispositif hydraulique 14 représentée en figure 1, les conduites 15, 16 associées à chaque vérin 1, 2 sont reliées ensemble par la voie correspondante de dérivation 14a du distributeur 14.

Cette position, dite de décroisement ou de découplage, isole les deux chambres anti-dévers 8, 13 du vérin 1 des deux chambres anti-dévers 8, 13 du vérin 2 et est adoptée lorsque le véhicule se déplace en ligne droite de façon à obtenir une suspension plus souple et moins amortie sur les sollicitations dissymétriques de la route que lorsque le distributeur 14 est en position de croisement des chambres respectives 8, 13 des vérins 1, 2. A cette position de croisement, les deux chambres 8, 13 du vérin 1 sont croisées avec respectivement les deux chambres 13, 8 du vérin 2 par les deux voies croisées 14b du distributeur 14 remplaçant les voies de dérivation 14a. A la position de croisement du distributeur 14, on retrouve la fonction anti-dévers habituelle avec une forte raideur et un fort amortissement.

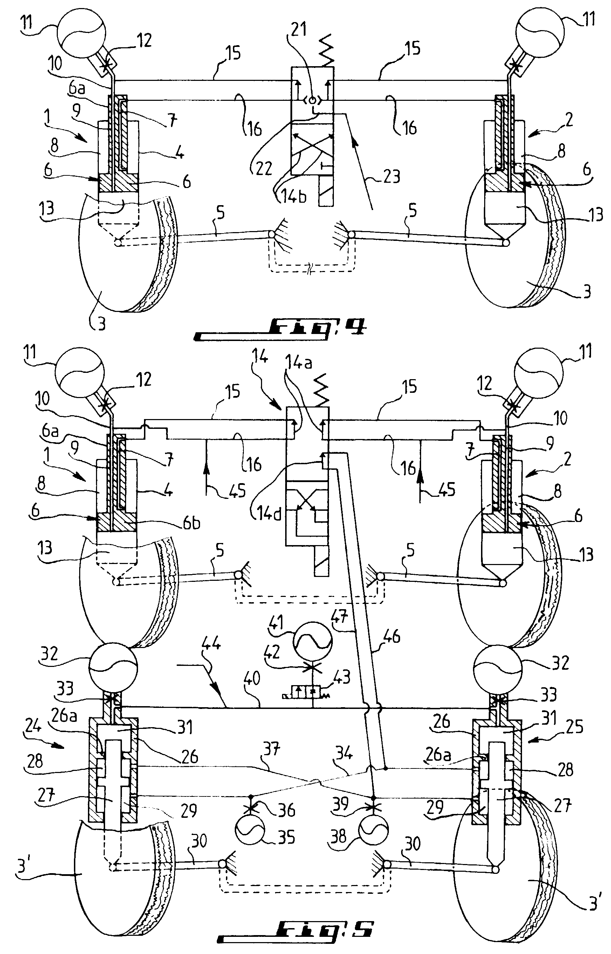

La figure 2 représente une variante de réalisation du distributeur hydraulique 14 associé aux deux vérins 1, 2. Cette figure représente la position de décroisement des chambres respectives 8, 13 des vérins 1, 2 semblable à celle de la figure 1, mais chaque voie de dérivation 14a du distributeur 14 est raccordée par une voie 14c à un accumulateur hydropneumatique à membrane additionnel 17 par l'intermédiaire d'un amortisseur additionnel 18. Cette configuration permet, à la position de décroisement du distributeur 14, de relier chaque ensemble accumulateur hydropneumatique 17 et amortisseur 18 en parallèle à l'ensemble accumulateur hydropneumatique 11 et amortisseur 12 du vérin correspondant de façon à donner moins de raideur et moins d'amortissement que dans la position de croisement du distributeur 14 selon laquelle les deux voies croisées 14b relient en série deux amortisseurs supplémentaires 19 respectivement avec les deux amortisseurs additionnels 18, donnant ainsi plus d'amortissement et plus de raideur en roulis et plus d'amortissement en pompage.

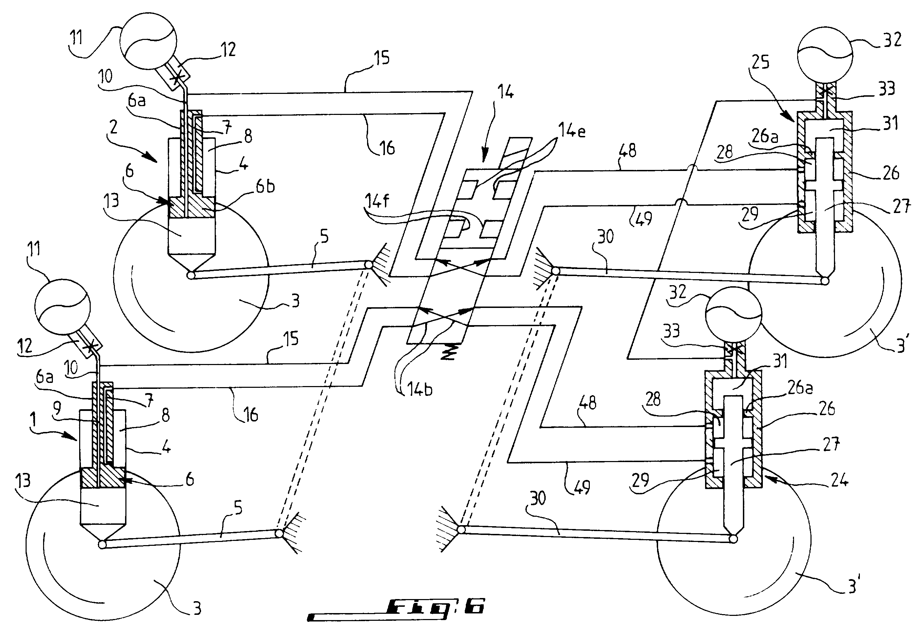

La figure 3 représente une configuration de distributeur hydraulique 14 semblable à celle du distributeur de la figure 1, mais selon laquelle le distributeur 14 comporte en plus dans chaque voie de croisement 14b un amortisseur supplémentaire 20 qui permet, en position de croisement du distributeur 14, de donner plus d'amortissement qu'en position de décroisement de celui-ci.

Le distributeur hydraulique 14 de la figure 4 se différencie de celui de la figure 1 en ce qu'en position de décroisement du distributeur représentée sur cette figure, les deux paires séparées de conduites 15, 16 sont en communication de fluide par l'intermédiaire d'un clapet à bille 21 avec une voie 22 du distributeur raccordée à une conduite 23 elle-même raccordée à un correcteur externe de hauteur hydraulique de la caisse du véhicule. Ainsi, en envoyant du fluide dans la conduite 23, on règle la hauteur de la caisse du véhicule à une hauteur souhaitée. Ce correcteur externe n'agit donc que lors des déplacements en ligne droite du véhicule et la bille du clapet 21 coupe la communication de fluide entre les vérins 1 et 2 tant que le correcteur n'intervient pas. En position de croisement du distributeur 14, on retrouve la configuration habituelle en anti-dévers de la suspension procurant plus d'amortissement à celle-ci, l'orifice auquel aboutit la conduite 23 étant fermé.

La suspension hydropneumatique représentée en figure 5 comprend, en plus des deux vérins hydrauliques 1, 2 de l'essieu avant du véhicule, deux vérins hydrauliques 24, 25 de l'essieu arrière de ce véhicule.

Les deux vérins 24, 25 sont du type comprenant chacun un cylindre 26 solidaire de la caisse du véhicule et dans lequel est monté coulissant un piston 27 à double tige définissant dans le cylindre 26 deux chambres anti-dévers supérieure 28 et inférieure 29. La partie inférieure de chaque piston 27 est reliée au bras de support 30 d'une roue arrière 3'. Chaque piston 27 traverse une cloison transversale interne 26a du cylindre 26 en pénétrant dans une chambre supérieure anti-pompage 31 qui est raccordée à un accumulateur hydropneumatique à membrane 32 par l'intermédiaire d'un amortisseur 33, les chambres anti-pompage assurant également la suspension de l'essieu arrière.

Une conduite 34 relie la chambre anti-dévers 28 du vérin de droite 25 à la chambre anti-dévers 29 du vérin de gauche 24 ainsi qu'à un accumulateur hydropneumatique 35 par l'intermédiaire d'un amortisseur 36. Une conduite 37 relie la chambre anti-dévers 28 du vérin de gauche 24 à la chambre anti-dévers 29 du vérin de droite 25 ainsi qu'à un accumulateur hydropneumatique 38 par l'intermédiaire d'un amortisseur 39.

Les chambres anti-pompage 31 des deux vérins 24, 25 de l'essieu arrière sont reliées entre elles par une conduite 40 à laquelle est éventuellement raccordé un accumulateur hydropneumatique 41, auquel est associé un amortisseur 42, par l'intermédiaire d'un distributeur 43 à une voie et à commande électromagnétique avec rappel par ressort.

La référence 44 désigne une conduite reliée à la conduite 40 et raccordée à un correcteur externe (non représenté) de hauteur de l'essieu arrière par rapport au sol. Les conduites 16 des deux vérins 1, 2 de l'essieu avant sont également reliées respectivement à deux conduites 45 elles-mêmes reliées respectivement à deux correcteurs externes de hauteur (non représentés) avant gauche et avant droite. Ces correcteurs de hauteur configurent la suspension en suspension isostatique à trois circuits correcteurs indépendants et connue en soi.

La figure 5 montre de plus que la conduite 15 communique avec la chambre annulaire 8 et la conduite 16 communique avec la chambre inférieure 13.

Lorsque le véhicule se déplace en ligne droite, le distributeur 14 est commandé à sa position de décroisement représentée en figure 5 de façon que les chambres anti-dévers des vérins 1, 2 de l'essieu avant soient isolées les unes des autres par les voies de dérivation 14a. A cette position du distributeur 14, deux conduites 46, 47 reliées respectivement aux conduites de croisement 34, 37 des chambres anti-dévers des vérins 24, 25 de l'essieu arrière sont reliés l'une à l'autre par une voie de dérivation 14d du distributeur 14, de sorte que les deux accumulateurs hydropneumatiques 35, 38 ne subissent aucune variation de volume ni en pompage, ni en roulis. Selon cette configuration de croisement, une chambre anti-dévers d'un vérin 24, 25 de l'essieu arrière est reliée à la chambre du vérin 1, 2 de l'essieu avant situé du même côté et qui est sollicitée de la même façon. Par exemple, la chambre 28 du vérin de droite 25 de l'essieu arrière est reliée à la chambre 13 du vérin de droite 2 de l'essieu avant et également à la chambre 8 du vérin de gauche 1 de l'essieu avant.

La figure 6 représente l'application de l'invention à une suspension hydropneumatique dont les vérins hydrauliques assurent une fonction anti-tangage.

Sur cette figure, les vérins 1, 2 de l'essieu avant sont identiques aux vérins 1, 2 décrits jusqu'à maintenant et les vérins 24, 25 de l'essieu arrière sont identiques aux vérins 24, 25 décrits en figure 5.

Le distributeur 14 est représenté en figure 6 en mode de croisement selon lequel la chambre anti-tangage 28 du vérin de gauche 24 de l'essieu arrière est reliée à la chambre anti-tangage 8 du vérin de gauche 1 de l'essieu avant par l'intermédiaire de la conduite 48 reliée en série à la conduite 16 via l'une des voies de croisement 14b du distributeur 14. La chambre anti-tangage 29 du vérin de gauche 24 de l'essieu arrière est reliée à la chambre anti-tangage 13 du vérin de gauche 1 de l'essieu avant par l'intermédiaire de la conduite 49 reliée en série à la conduite 15 via l'autre des voies de croisement 14b du distributeur 14. Le vérin de droite 25 de l'essieu arrière est relié au vérin de droite 2 de l'essieu avant de façon identique aux vérins de gauche 24 et 1 respectivement de l'essieu arrière et de l'essieu avant. De la sorte, on assure la fonction anti-tangage de la suspension du véhicule.

Lorsque le distributeur 14 est en mode de décroisement en position de ligne droite du véhicule, les chambres 8, 13 des vérins 1, 2 de l'essieu avant sont isolées respectivement des chambres 28, 29 des vérins 24, 25 de l'essieu arrière par les voies de dérivation 14e et 14f du distributeur 14 de façon à procurer à la suspension du véhicule une plus grande souplesse pour les petites sollicitations en tangage.

Le dispositif de l'invention ci-dessus décrit permet donc, lors des déplacements du véhicule en ligne droite, de conserver une raideur et un amortissement minimaux en mode découplé ou de décroisement du distributeur. Lorsque la suspension hydropneumatique possède la fonction anti-dévers, le dispositif de l'invention permet de se passer d'une barre anti-dévers mécanique et réalise la fonction d'une barre anti-dévers hydraulique à la fois raide et amortie.

## Revendications

1. Dispositif de suspension hydropneumatique pour véhicule automobile comprenant, pour chaque roue du véhicule, un vérin hydraulique dont -les chambres sont croisées respectivement avec les chambres d'un autre vérin hydraulique, la chambre sous pression de chaque vérin étant raccordée à un accumulateur hydropneumatique par l'intermédiaire d'un amortisseur, caractérisé en ce qu'il comprend un distributeur hydraulique (14) pouvant occuper une position de croisement des chambres (8, 13) de deux vérins hydrauliques (1, 2) et une position de décroisement dans laquelle les chambres (8, 13) d'un vérin hydraulique (1) sont isolées des chambres (8, 13) de l'autre vérin hydraulique (2) de façon à obtenir une suspension plus souple et moins amortie en position de ligne droite du véhicule.

2. Dispositif selon la revendication 1, caractérisé en ce qu'en position de décroisement, le distributeur hydraulique (14) précité relie en série les deux conduites (15, 16) raccordant les deux chambres (8, 13) de chaque vérin hydraulique (1 ; 2) au distributeur (14).

3. Dispositif selon la revendication 2, caractérisé en ce qu'en position de décroisement, le distributeur hydraulique (14) relie également les deux conduites raccordées ensemble (15, 16) d'un vérin (1 ; 2) à un accumulateur hydropneumatique additionnel (17) par l'intermédiaire d'un amortisseur additionnel (18) de façon que l'ensemble accumulateur-amortisseur additionnels soit relié en parallèle à l'ensemble précité accumulateur hydropneumatique (11) et amortisseur (12).

4. Dispositif selon la revendication 3, caractérisé en ce qu'en position de croisement, le distributeur hydraulique (14) relie chaque conduite de croisement (15, 16) de deux chambres (8, 13) des deux vérins hydrauliques (1, 2) à un amortisseur (19) relié en série à l'amortisseur additionnel (18) associé à l'accumulateur hydropneumatique additionnel (17).

5. Dispositif selon la revendication 1 ou 2, caractérisé en ce qu'en position de croisement, le distributeur hydraulique (14) relie un amortisseur (20) en série avec chaque conduite de croisement (15, 16) de deux chambres (8, 13) des deux vérins hydrauliques (1, 2).

6. Dispositif selon l'une des revendications précédentes, caractérisé en ce que le distributeur hydraulique (14), en position de décroisement, est agencé pour raccorder ensemble en série les deux paires de conduites (15, 16) respectivement des deux vérins hydrauliques (1, 2) à un correcteur hydraulique de hauteur de la caisse du véhicule par l'intermédiaire d'un clapet à bille (21) de liaison des deux paires de conduites (15, 16), le clapet servant à empêcher le passage de fluide d'un vérin à l'autre tant que le correcteur n'intervient pas.

7. Dispositif selon l'une des revendications précédentes, du type où deux vérins (1, 2) de l'essieu avant et deux vérins (24, 25) de l'essieu arrière du véhicule assurent une fonction anti-dévers, avec les chambres anti-dévers (8, 13 ; 28, 29) d'une paire de vérins (1, 2 ; 24, 25) d'un même essieu qui sont croisées, caractérisé en ce que le distributeur hydraulique (14), en position de croisement des chambres anti-dévers (8, 13 ; 28, 29) de chaque paire de vérins (1, 2 ; 24, 25), met en communication de fluide les deux paires de chambres croisées anti-dévers (28, 29) des deux vérins (24, 25) de l'essieu arrière respectivement avec deux paires de chambres croisées anti-dévers (8, 13) des deux vérins (1, 2) de l'essieu avant, chacune des chambres anti-dévers (28, 29) d'un vérin (24 ; 25) de l'essieu arrière communiquant avec la chambre anti-dévers sollicitée de manière identique du vérin (1 ; 2) de l'essieu avant situé du même côté, et en ce que le distributeur hydraulique (14), en position de décroisement, isole les chambres anti-dévers (8, 13) des vérins (1, 2) de l'essieu avant en reliant ensemble les conduites de liaison (15, 16) de deux chambres anti-dévers (8, 13) d'un même vérin (1 ; 2) et court-circuite les conduites de croisement (34, 37) des chambres anti-dévers (28, 29) des vérins (24, 25) de l'essieu arrière.

8. Dispositif selon la revendication 7, caractérisé en ce que les deux vérins (24, 25) de l'essieu arrière comprennent chacun deux chambres anti-dévers (28, 29) et une chambre supérieure anti-pompage (31) raccordée à l'accumulateur hydropneumatique (32).

9. Dispositif selon l'une des revendications 1 à 6, du type où chaque paire de vérins (1, 24 ; 2, 25) situés d'un même côté respectivement de l'essieu avant et de l'essieu arrière assure une fonction anti-tangage avec les chambres anti-tangage (28, 29 ; 8, 13) des deux vérins (1, 24 ; 2, 25) d'un même côté qui sont croisées, caractérisé en ce que le distributeur hydraulique (14), en position de croisement, met en communication de fluide les deux chambres anti-tangage (8, 28 ; 13, 29) respectivement des deux vérins (1, 24 ; 2, 25) d'un même côté et, en position de décroisement, isole les deux chambres (8, 13) d'un vérin (1 ; 2) des deux chambres (28, 29) du vérin (24 ; 25) situé du même côté.

10. Dispositif selon la revendication 9, caractérisé en ce que les deux vérins (24, 25) de l'essieu arrière comprennent chacun deux chambres anti-tangage (28, 29) et une chambre anti-pompage (31) raccordée à l'accumulateur hydropneumatique (32).

11. Dispositif selon l'une des revendications précédentes, caractérisé en ce que le distributeur (14) est du type à commande électromagnétique avec rappel par ressort.
